# EUROPEAN PATENT APPLICATION

(11) **EP 3 211 903 A1**
(43) Date of publication of application: **30.08.2017**
(21) Application number: 16774837.5
(22) Date of filing: 07.07.2016
(51) Int. Cl.: H04N 21/431, H04N 21/472

(54) **PREVIEW PLAYING METHOD AND DEVICE**

(30) Priority: 31.12.2015 CN 201511023878
(71) Applicant: LE Holdings (Beijing) Co., Ltd., Beijing 100025 (CN); Le Shi Internet Information & Technology Corp., Beijing, Beijing 100025 (CN)
(72) Inventor: The designation of the inventor has not yet been filed
(74) Representative: DREISS Patentanwälte PartG mbB
(86) International application number: PCT/CN2016/089281
(87) International publication number: WO 2017/113721

(57) **Abstract**

The present disclosure relates to a method and device for preview play. The method includes: determining a flag of a preview window when the preview window receives a play instruction; obtaining a pre-built corresponding relation of the flag of the preview window and a video resource; determining the video resource corresponding to the flag of the preview window according to the corresponding relation; and playing the video resource in the preview window. If a user wants to know whether he/she is interested in the video resource corresponding to the preview window, he or she may input a play instruction into the preview window. When the preview window receives the play instruction inputted by the user, it needs to determine a corresponding video resource via the flag of the preview window so that the video resource is played in the preview window. In this way, the user may decide whether to watch the video resource by the video resource played in the preview window. Solutions provided by the disclosure may help users to quickly know whether the video resource interests them, thereby providing a better preview experience.

## Description

The present disclosure claims priority of the Chinese patent application No. 2015110238788, titled "METHOD AND DEVICE FOR PREVIEW PLAY", filed with the State Intellectual Property Office of China on December 31, 2015, the entire contents of which are incorporated herein by reference.

### TECHNICAL FIELD

The present disclosure relates to the field of communication technology, and in particular, to a method and device for preview play.

### BACKGROUND

At present, software for playing a video on a terminal may display a preview window of the video through which users may know the content of the video.

In the preview window, only an image and proper texts are displayed to indicate corresponding information of the video. When watching the image and texts in the preview window, users need to judge whether they like the video through the image and texts in the preview window and decide whether to play.

However, because the image and texts in the preview window cannot effectively convey the substantial content of the video, users cannot know whether the video has a highlight that interests them by the image and texts in the preview window. Moreover, in some cases, the image and texts in the preview window easily mislead users to an incorrect judgment on the video. Therefore, the above relevant technology fails to provide users with a good preview experience.

### SUMMARY

The present disclosure provides a method and device for preview play so that a preview window displays a video resource directly, thereby providing a better preview experience.

According to a first aspect of embodiments of the present disclosure, it provides a method for preview play, including:
determining a flag of a preview window when the preview window receives a play instruction;
obtaining a pre-built corresponding relation of the flag of the preview window and a video resource;
determining the video resource corresponding to the flag of the preview window according to the corresponding relation; and
playing the video resource in the preview window.

Optionally, after playing the video resource in the preview window, it further includes :
closing a sound of playing the video resource in the preview window when a target preview window receives the play instruction;
determining the target video resource corresponding to the flag of the target preview window according to the corresponding relation; and
playing the target video resource in the target preview window.

Optionally, after playing the video resource in the preview window, it further includes :
stopping playing the video resource in the preview window when a target preview window receives the play instruction;
determining the target video resource corresponding to the flag of the target preview window according to the corresponding relation; and
playing the target video resource in the target preview window.

Optionally, after determining the video resource corresponding to the flag of the preview window according to the corresponding relation, it further includes:
judging whether there exists the video resource corresponding to the flag of the preview window;
triggering the step of playing the video resource in the preview window when there exists the video resource corresponding to the flag of the preview window; and
displaying a prompt message that there does not exist the video resource in the preview window when there does not exist the video resource corresponding to the flag of the preview window;

Optionally, the step of playing the video resource in the preview window includes :
determining a play start time corresponding to the video resource; and
starting playing the video resource from the play start time in the preview window.

According to a second aspect of embodiments of the present disclosure, it provides a device for preview play, including:
a first determining module configured to determine a flag of a preview window when the preview window receives a play instruction;
a first obtaining module configured to obtain a pre-built corresponding relation of the flag of the preview window and a video resource;
a second determining module configured to determine the video resource corresponding to the flag of the preview window according to the corresponding relation; and
a first playing module configured to play the video resource in the preview window.

Optionally, the device further includes:
a closing module configured to close a sound of playing the video resource in the preview window when a target preview window receives the play instruction;
a third determining module configured to determine the target video resource corresponding to the flag of the target preview window according to the corresponding relation; and
a second playing module configured to play the target video resource in the target preview window.

Optionally, the device further includes:
a stop-playing module configured to stop playing the video resource in the preview window when a target preview window receives the play instruction;
a fourth determining module configured to determine the target video resource corresponding to the flag of the target preview window according to the corresponding relation; and
a third playing module configured to play the target video resource in the target preview window.

Optionally, the device further includes:
a judging module configured to judge whether there exists the video resource corresponding to the flag of the preview window;
a triggering module configured to trigger the first playing module when there exists the video resource corresponding to the flag of the preview window; and
a displaying module configured to display a prompt message that there does not exist the video resource in the preview window when there does not exist the video resource corresponding to the flag of the preview window;

Optionally, the first playing module includes :
a determining submodule configured to determine a play start time corresponding to the video resource; and
a playing submodule configured to start playing the video resource from the play start time in the preview window.

In a third aspect, a terminal is further provided, which includes the device for preview play of the second aspect aforementioned.

In a fourth aspect, a computer storage medium is further provided, wherein the computer storage medium may store program, and when the program is executed, part or all of the steps of the respective modes in the method for preview play provided according to the first aspect of the present disclosure can be realized.

In a fifth aspect, a device for preview play is further provided, which includes:
a processor;
a memory for storing executable instructions of the processor;
wherein the processor is configured to:
determine a flag of a preview window when the preview window receives a play instruction;
obtain a pre-built corresponding relation of the flag of the preview window and a video resource;
determine the video resource corresponding to the flag of the preview window according to the corresponding relation; and
play the video resource in the preview window.

Compared with the prior art, technical solutions of the present embodiments have the following advantages and features:
In solutions provided by the present disclosure, if a user wants to know whether he/she is interested in the video resource corresponding to the preview window, he or she may input a play instruction into the preview window. When the preview window receives the play instruction inputted by the user, it needs to determine a corresponding video resource via the flag of the preview window so that the video resource is played in the preview window. In this way, the user may decide whether to watch the video resource by the video resource played in preview the window. Therefore, solutions provided by the disclosure may help users to quickly know whether the video resource interests them, thereby providing a better preview experience.

### BRIEF DESCRIPTION OF THE DRAWINGS

In order to more clearly illustrate the technical solutions of the embodiments of the present disclosure or of the prior art, the drawings for the description of the embodiments or the prior art will be briefly described below. Apparently, the drawings as described below are only some embodiments of the present disclosure, and other drawings may also be obtained by one of ordinary skills in the art according to these drawings without creative effort.
Figure 1 is a flow chart of a method for preview play according to embodiments of the present disclosure.
Figure 2 is a flow chart of another method for preview play according to embodiments of the present disclosure.
Figure 3 is a flow chart of yet another method for preview play according to embodiments of the present disclosure.
Figure 4 is a flow chart of yet another method for preview play according to embodiments of the present disclosure.
Figure 5 is a flow chart of yet another method preview play according to embodiments of the present disclosure.
Figure 6 is a diagram of a device for preview play according to embodiments of the present disclosure.
Figure 7 is a diagram of another device for preview play according to embodiments of the present disclosure.
Figure 8 is a diagram of yet another device for preview play according to embodiments of the present disclosure.
Figure 9 is a diagram of yet another device for preview play according to embodiments of the present disclosure.
Figure 10 is a diagram of yet another device for preview play according to embodiments of the present disclosure.

### DETAILED DESCRIPTION

The technical solutions in the embodiments of the present disclosure will be described clearly and fully below in conjunction with the drawings in the embodiments of the present disclosure. Apparently, the embodiments described are only a part of the embodiments of the present disclosure, rather than being the whole embodiments. All the other embodiments obtained by one of ordinary skills in the art based on the embodiments of the present disclosure without creative effort will fall into the scope of the present disclosure.

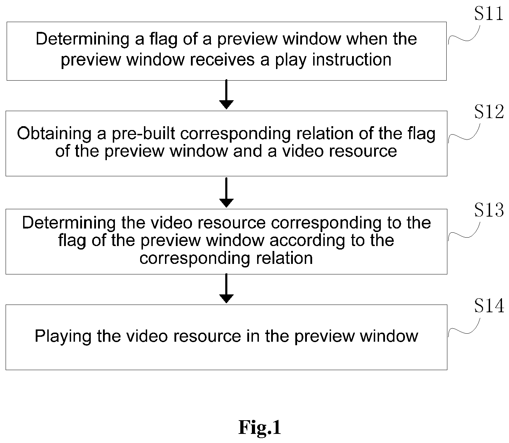

Figure 1 is a flow chart of a method for preview play according to embodiments of the present disclosure. The method for preview play as shown in Figure 1 may be applied to a terminal. The method for preview play provided by the present disclosure may directly display video resource in the preview window so as to help users to quickly know whether the video resource interests them, thereby providing a better preview experience. The method includes the following steps.

Step S11: determining a flag of a preview window when the preview window receives a play instruction.

The method provided by the present disclosure is applied to a terminal in which video play software may be installed. The terminal may be a smart TV, a smart phone, a tablet computer, a desktop computer or a laptop and other devices.

Where the terminal is a smart TV, users may use a remote control to choose the preview window of the video play software of the smart TV and input a play instruction of the preview window into the smart TV. When the preview window of the video play software of the smart TV receives a play instruction, the smart TV will determine a flag of the preview window so that subsequent steps may determine the video resource according to the flag.

Where the terminal is a computer, users may use a mouse to choose the preview window of the video play software of the computer and input a play instruction of the preview window into the smart TV. When the preview window of the video play software of the computer receives a play instruction, the computer will determine a flag of the preview window so that subsequent steps may determine the video resource according to the flag.

Where the terminal is a smart phone, users may choose the preview window of the video play software of the smart phone and input a play instruction of the preview window into the smart phone. When the preview window of the video play software of the smart phone receives a play instruction, the computer will determine a flag of the preview window so that subsequent steps may determine the video resource according to the flag.

The flag of a preview window may be formed of characters, figures, English letters, Chinese characters or symbols. For example, the flag of a preview window may be in form of S1, 12345, or S-1.

Step S12: obtaining a pre-built corresponding relation of the flag of the preview window and a video resource.

There might exist multiple preview windows in the video play software of a terminal, therefore it is required to pre-build the corresponding relation of the flag of each preview window and video resources so that each preview window corresponds to one video resource.

For instance, supposing that there exist five preview windows in the video play software of the terminal: a first preview window, a second preview window, a third preview window, a fourth preview window and a fifth preview window, the pre-built corresponding relations of flags of preview windows and video resources are: flag S1 of the first preview window corresponds to video resource A; flag S2 of the second preview window corresponds to video resource B; flag S3 of the third preview window corresponds to video resource C; flag S4 of the fourth preview window corresponds to video resource D; and flag S5 of the fifth preview window corresponds to video resource E.

Step S13: determining the video resource corresponding to the flag of the preview window according to the corresponding relation.

After obtaining a pre-built corresponding relation of the flag of the preview window and a video resource, the terminal may determine the video resource corresponding to the flag of the preview window according to the corresponding relation.

For instance, supposing that there exist five preview windows in the video play software of the terminal: a first preview window, a second preview window, a third preview window, a fourth preview window and a fifth preview window, the pre-built corresponding relations of flags of preview windows and video resources are: flag S1 of the first preview window corresponds to video resource A; flag S2 of the second preview window corresponds to video resource B; flag S3 of the third preview window corresponds to video resource C; flag S4 of the fourth preview window corresponds to video resource D; and flag S5 of the fifth preview window corresponds to video resource E. Supposing that the third preview window in the video play software of the terminal receives a play instruction, the terminal will determine the flag S3 of the third preview window; then the terminal will obtain a pre-built corresponding relation of the flag of the preview window and a video resource. At this moment, the terminal will determine the video resource C corresponding to the flag S3 of the preview window according to the corresponding relation.

Step S14: playing the video resource in the preview window.

After determining the video resource corresponding to the flag of the preview window according to the corresponding relation, the terminal will play the video resource in the preview window so that users may see the video resource in the preview window, and users may quickly know whether the video resource interests them according to the video resource played in the preview window.

In the embodiment as shown in Figure 1, if a user wants to know whether he/she is interested in the video resource corresponding to the preview window, he or she may input a play instruction into the preview window. When the preview window receives the play instruction inputted by the user, it needs to determine a corresponding video resource via the flag of the preview window so that the video resource is played in the preview window. In this way, the user may decide whether to watch the video resource by the video resource played in preview the window. Therefore, solutions provided by the disclosure may directly display the video resource in the preview window to help users to quickly know whether the video resource interests them, thereby providing a better preview experience.

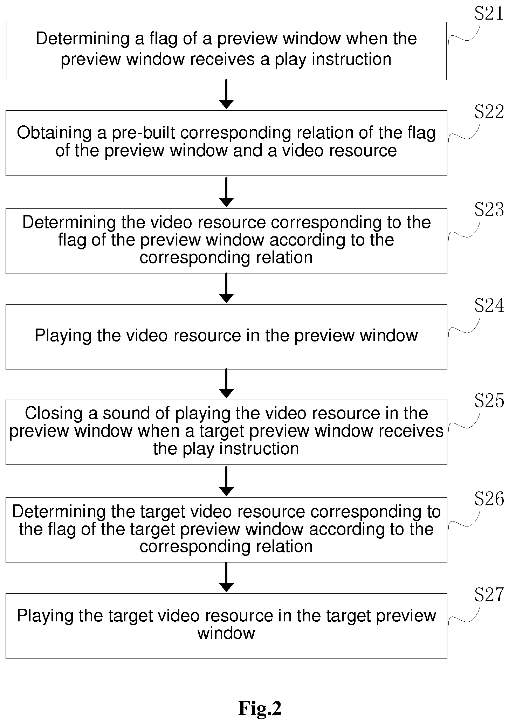

Figure 2 is a flow chart of another method for preview play according to embodiments of the present disclosure. Figure 2 is an optional embodiment based on Figure 1. In the embodiment as shown in Figure 2, the same part as the embodiment shown in Figure 1 may be referred to introductions and illustrations in the embodiment of Figure 1. The method of Figure 2 includes the following steps.

Step S21: determining a flag of a preview window when the preview window receives a play instruction.

Step S22: obtaining a pre-built corresponding relation of the flag of the preview window and a video resource.

Step S23: determining the video resource corresponding to the flag of the preview window according to the corresponding relation.

Step S24: playing the video resource in the preview window.

Step S25: closing a sound of playing the video resource in the preview window when a target preview window receives the play instruction.

After playing the video resource in a preview window of the video play software of the terminal, the terminal needs to judge whether other preview windows of the video play software receive the play instruction. If judging that the target preview window of the video play software receives the play instruction, the terminal will close a sound of playing the video resource in the preview window and meanwhile ensure that the preview window only displays pictures of the video resource. Therefore, solutions provided by the present disclosure may prevent the problem of noisy sound generated by simultaneous playing video resources in multiple preview windows.

Step S26: determining the target video resource corresponding to the flag of the target preview window according to the corresponding relation.

After closing the sound of playing the video resource in the preview window, the terminal may determine the target video resource corresponding to the flag of the target preview window according to the pre-obtained corresponding relation.

Step S27: playing the target video resource in the target preview window.

After determining the target video resource corresponding to the flag of the target preview window according to the corresponding relation, the terminal may play the target video resource in the target preview window. As a result, users may watch the video resource played in the preview window and the target video resource played in the target preview window simultaneously; and the terminal only inputs the sound of the target video resource played in the target preview window.

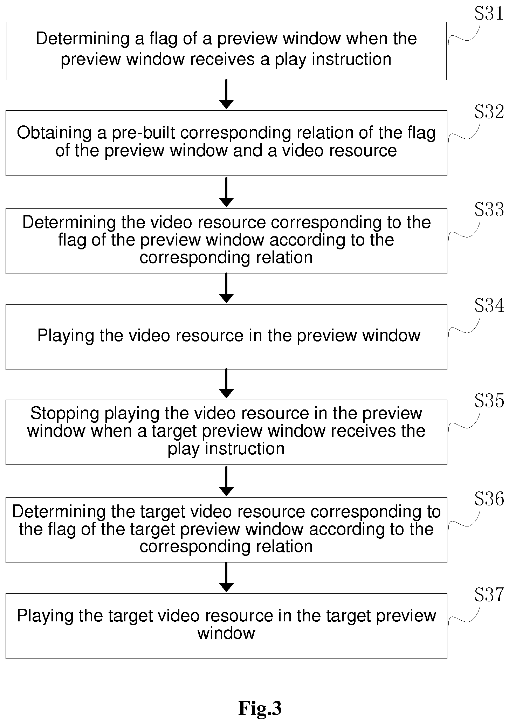

Figure 3 is a flow chart of yet another method for preview play according to embodiments of the present disclosure. Figure 3 is an optional embodiment based on Figure 1. In the embodiment as shown in Figure 3, the same part as the embodiment shown in Figure 1 may be referred to introductions and illustrations in the embodiment of Figure 1. The method of Figure 3 includes the following steps.

Step S31: determining a flag of a preview window when the preview window receives a play instruction.

Step S32: obtaining a pre-built corresponding relation of the flag of the preview window and a video resource.

Step S33: determining the video resource corresponding to the flag of the preview window according to the corresponding relation.

Step S34: playing the video resource in the preview window.

Step S35: stopping playing the video resource in the preview window when a target preview window receives the play instruction.

After playing the video resource in a preview window of the video play software of the terminal, the terminal needs to judge whether other preview windows of the video play software receive the play instruction. If judging that the target preview window of the video play software receives the play instruction, the terminal will stop playing the video resource in the preview window, to ensure that the terminal can only play the video resource in one preview window at one time.

Step S36: determining the target video resource corresponding to the flag of the target preview window according to the corresponding relation.

After closing a sound of playing the video resource in the preview window, the terminal may determine the target video resource corresponding to the flag of the target preview window according to the pre-obtained corresponding relation.

Step S37: playing the target video resource in the target preview window.

After determining the target video resource corresponding to the flag of the target preview window according to the corresponding relation, the terminal may play the target video resource in the target preview window. At this time, video resources will not continue to be played in the preview window of the terminal. Thus, the problem of high system resource occupation rate brought by simultaneously playing video resources in multiple preview windows can be prevented.

For instance, supposing that there exist three preview windows in the video play software of the terminal: a first preview window, a second preview window and a third preview window, the pre-built corresponding relations of flags of preview windows and video resources are: flag S1 of the first preview window corresponds to video resource A; flag S2 of the second preview window corresponds to video resource B; and flag S3 of the third preview window corresponds to video resource C. Supposing that the third preview window in the video play software of the terminal receives a play instruction input by the user, the terminal will determine the flag S3 of the third preview window. Then the terminal will obtain a pre-built corresponding relation of the flag of the preview window and the video resource, determine the video resource C corresponding to the flag S3 of the preview window according to the corresponding relation, and finally play the video resource C in the third preview window. Supposing that the first preview window in the video play software of the terminal further receives a play instruction inputted by the user, the terminal will firstly stop playing the video resource C in the third preview window. Then, the terminal will determine the flag S1 of the first preview window and the video resource A corresponding to the flag S1 of the first preview window according to the corresponding relation, and finally play the video resource C in the third preview window.

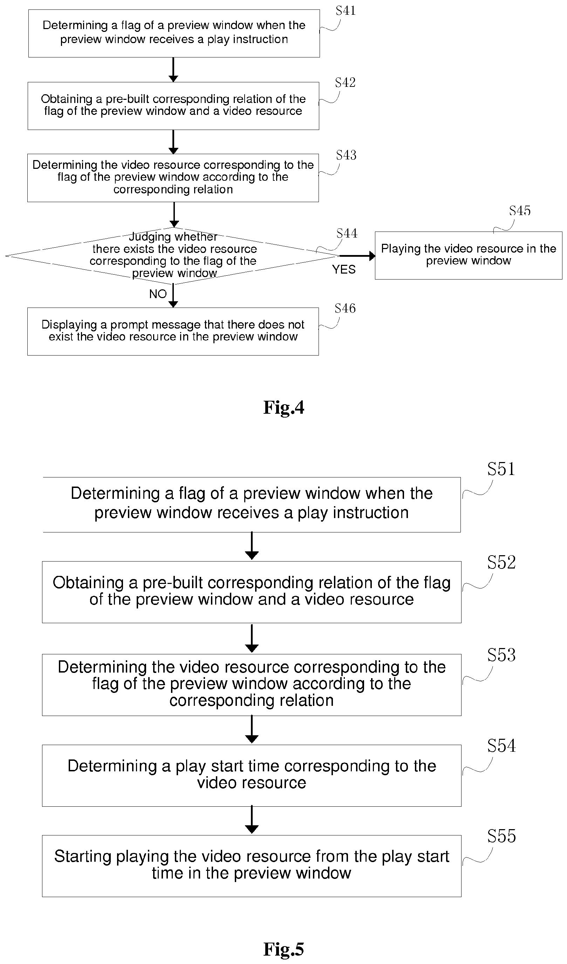

Figure 4 is a flow chart of yet another method for preview play according to embodiments of the present disclosure. Figure 4 is an optional embodiment based on Figure 1. In the embodiment as shown in Figure 4, the same part as the embodiment shown in Figure 1 may be referred to introductions and illustrations in the embodiment of Figure 1. The method of Figure 4 includes the following steps.

Step S41: determining a flag of a preview window when the preview window receives a play instruction.

Step S42: obtaining a pre-built corresponding relation of the flag of the preview window and a video resource.

Step S43: determining the video resource corresponding to the flag of the preview window according to the corresponding relation.

Step S44: judging whether there exists the video resource corresponding to the flag of the preview window. When there exists the video resource corresponding to the flag of the preview window, triggering S45; when there does not exist the video resource corresponding to the flag of the preview window, triggering S46.

After determining the target video resource corresponding to the flag of the target preview window according to the corresponding relation, the terminal needs to judge whether there exists the video resource corresponding to the flag of the preview window. When the terminal judges there exists the video resource corresponding to the flag of the preview window, it means that the terminal may play the video resource in the preview window, so step S45 is triggered. When the terminal judges there does not the video resource corresponding to the flag of the preview window, it means that the terminal fails to play the video resource in the preview window, then the terminal will display a prompt message that there does not exist the video resource in the preview window, so that users can know that the preview window cannot play video resources.

Step S45: playing the video resource in the preview window.

Step S46: displaying a prompt message that there does not exist the video resource in the preview window.

Figure 5 is a flow chart of yet another method for preview play according to embodiments of the present disclosure. Figure 5 is an optional embodiment based on Figure 1. In the embodiment as shown in Figure 5, the same part as the embodiment shown in Figure 1 may be referred to introductions and illustrations in the embodiment of Figure 1. The method of Figure 5 includes the following steps.

Step S51: determining a flag of a preview window when the preview window receives a play instruction.

Step S52: obtaining a pre-built corresponding relation of the flag of the preview window and a video resource.

Step S53: determining the video resource corresponding to the flag of the preview window according to the corresponding relation.

Step S54: determining a play start time corresponding to the video resource.

In order to make users see highlights of video resource in a preview window directly, a play start time of the highlights of the video resource in the preview window may be pre-determined. For instance, supposing that the time duration of a video resource is 50 minutes and highlights of the video resource is from 10 minutes to 20 minutes, the play start time corresponding to the video resource may be set for 10 minutes.

After determining the video resource corresponding to the flag of the preview window according to the corresponding relation, the terminal will determine a preset play start time corresponding to the video resource.

Step S55: starting playing the video resource from the play start time in the preview window.

After determining a play start time corresponding to the video resource, the terminal will start playing the video resource from the play start time in the preview window so that users can see the highlights of the video resource directly, thereby providing a better preview experience for users.

For instance, supposing that the time duration of video resource C is 40 minutes, and highlights of the video resource C is from 20 minutes to 30 minutes, the play start time corresponding to the video resource C may be preset at 20 minutes. For instance, supposing that there exist three preview windows in the video play software of the terminal: a first preview window, a second preview window and a third preview window, the pre-built corresponding relations of flags of preview windows and video resources are: flag S1 of the first preview window corresponds to video resource A; flag S2 of the second preview window corresponds to video resource B; and flag S3 of the third preview window corresponds to video resource C. Supposing that the third preview window in the video play software of the terminal receives a play instruction inputted by the user, the terminal will determine the flag S3 of the third preview window. Then the terminal will obtain a pre-built corresponding relation of the flag of the preview window and the video resource, and determine the video resource C corresponding to the flag S3 of the preview window according to the corresponding relation. At this time, the terminal needs to determine that the preset play start time corresponding to the video resource C is at 20 minutes. Finally, the terminal will start playing the video resource C from the play start time at 20 minute in the preview window so that users can see the highlights of the video resource directly, thereby providing a better preview experience for users.

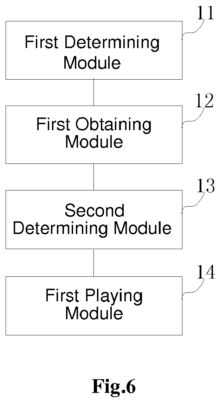

Figure 6 is a diagram of a device for preview play according to embodiments of the present disclosure. Referring to Figure 6, the device includes a first determining module 11, a first obtaining module 12, a second obtaining module 13 and a first playing module 14.

The first determining module 11 is configured to determine a flag of a preview window when the preview window receives a play instruction.

The first obtaining module 12 is configured to obtain a pre-built corresponding relation of the flag of the preview window and a video resource.

The second determining module 13 is configured to determine the video resource corresponding to the flag of the preview window according to the corresponding relation.

The first playing module 14 is configured to play the video resource in the preview window.

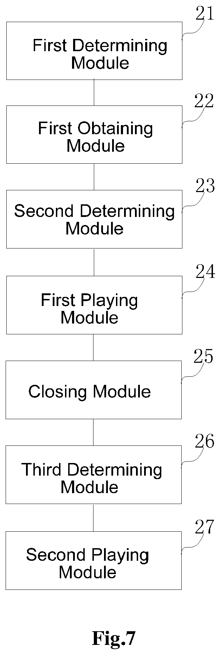

Figure 7 is a diagram of another device for preview play according to embodiments of the present disclosure. Referring to Figure 7, the device includes a first determining module 21, a first obtaining module 22, a second determining module 23, a first playing module 24, a closing module 25, a third determining module 26 and a second playing module 27.

The first determining module 21 is configured to determine a flag of a preview window when the preview window receives a play instruction.

The first obtaining module 22 is configured to obtain a pre-built corresponding relation of the flag of the preview window and a video resource.

The second determining module 23 is configured to determine the video resource corresponding to the flag of the preview window according to the corresponding relation.

The first playing module 24 is configured to play the video resource in the preview window.

The closing module 25 is configured to close a sound of playing the video resource in the preview window when a target preview window receives the play instruction.

The third determining module 26 is configured to determine the target video resource corresponding to the flag of the target preview window according to the corresponding relation.

The second playing module 27 is configured to play the target video resource in the target preview window.

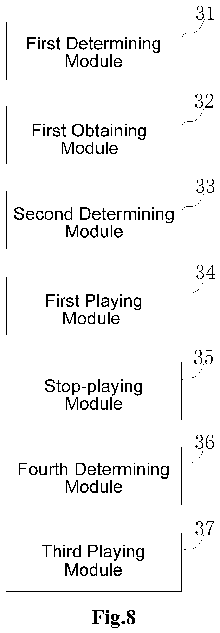

Figure 8 is a diagram of yet another device for preview play according to embodiments of the present disclosure. Referring to Figure 8, the device includes a first determining module 31, a first obtaining module 32, a second determining module 33, a first playing module 34, a stop-playing module 35, a fourth determining module 36 and a third determining module 37.

The first determining module 31 is configured to determine a flag of a preview window when the preview window receives a play instruction.

The first obtaining module 32 is configured to obtain a pre-built corresponding relation of the flag of the preview window and a video resource.

The second determining module 33 is configured to determine the video resource corresponding to the flag of the preview window according to the corresponding relation.

The first playing module 34 is configured to play the video resource in the preview window.

The stop-playing module 35 is configured to stop playing the video resource in the preview window when a target preview window receives the play instruction.

The fourth determining module 36 is configured to determine the target video resource corresponding to the flag of the target preview window according to the corresponding relation.

The third playing module 37 is configured to play the target video resource in the target preview window.

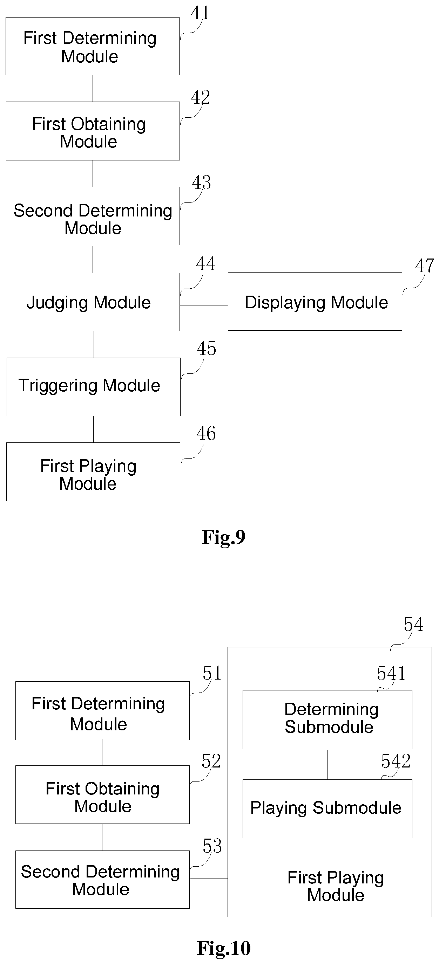

Figure 9 is a diagram of yet another device for preview play according to embodiments of the present disclosure. Referring to Figure 9, the device includes a first determining module 41, a first obtaining module 42, a second determining module 43, a judging module 44, a triggering module 45, a first playing module 46 and a displaying module 47.

The first determining module 41 is configured to determine a flag of a preview window when the preview window receives a play instruction.

The first obtaining module 42 is configured to obtain a pre-built corresponding relation of the flag of the preview window and a video resource.

The second determining module 43 is configured to determine the video resource corresponding to the flag of the preview window according to the corresponding relation.

The judging module 44 is configured to judge whether there exists the video resource corresponding to the flag of the preview window.

The triggering module 45 is configured to trigger the first playing module when there exists the video resource corresponding to the flag of the preview window.

The first playing module 46 is configured to play the video resource in the preview window.

The displaying module 47 is configured to display a prompt message that there does not exist the video resource in the preview window when there does not exist the video resource corresponding to the flag of the preview window.

Figure 10 is a diagram of yet another device for preview play according to embodiments of the present disclosure. Referring to Figure 10, the device includes a first determining module 51, a first obtaining module 52, a second determining module 53, and a first playing module 54, and the first playing module 54 includes a determining submodule 541 and a playing submodule 542.

The first determining module 51 is configured to determine a flag of a preview window when the preview window receives a play instruction.

The first obtaining module 52 is configured to obtain a pre-built corresponding relation of the flag of the preview window and a video resource.

The second determining module 53 is configured to determine the video resource corresponding to the flag of the preview window according to the corresponding relation.

The first playing module 54 is configured to play the video resource in the preview window.

The determining submodule 541 is configured to determine a play start time corresponding to the video resource.

The playing submodule 542 is configured to start playing the video resource from the play start time in the preview window.

With respect to the devices in above embodiments, the specific modes for performing operation of each module have been described in details in the embodiments relevant to the method, and will not be illustrated here again in detail.

With respect to the devices in above embodiments, the specific modes for performing operation of each module have been described in details in the embodiments relevant to the method, and will not be illustrated here again in detail.

The above are only specific embodiments of the present disclosure and the scope of the disclosure is not limited hereto. Any modifications or substitutions easily conceived by one of ordinary skills in the art, within the technology scope of the present disclosure, shall fall into the scope of the present disclosure. Therefore, the scope of the disclosure shall be defined by the accompanying claims.

The embodiments of the present disclosure further provides a computer storage medium, wherein the computer storage medium may store program, and when the program is executed, part or all of steps in respective modes of the method for preview play provided by the embodiments in Figures 1-5 can be realized.

The embodiments of the present disclosure further provides a device for preview play, wherein the device includes:
a processor;
a memory for storing executable instructions of the processor;
wherein the processor is configured to:
determine a flag of a preview window when the preview window receives a play instruction;
obtain a pre-built corresponding relation of the flag of the preview window and a video resource;
determine the video resource corresponding to the flag of the preview window according to the corresponding relation; and
play the video resource in the preview window.

The above are only specific embodiments of the present disclosure and the scope of the disclosure is not limited hereto. Any modifications or substitutions easily conceived by one of ordinary skills in the art, within the technology scope of the present disclosure, shall fall into the scope of the present disclosure. Therefore, the scope of the disclosure shall be defined by the accompanying claims.

## Claims

1. A method for preview play, wherein the method comprises:
determining a flag of a preview window when the preview window receives a play instruction;
obtaining a pre-built corresponding relation of the flag of the preview window and a video resource;
determining the video resource corresponding to the flag of the preview window according to the corresponding relation; and
playing the video resource in the preview window.

2. The method for preview play according to claim 1, wherein after playing the video resource in the preview window, the method further comprises:
closing a sound of playing the video resource in the preview window when a target preview window receives the play instruction;
determining the target video resource corresponding to the flag of the target preview window according to the corresponding relation; and
playing the target video resource in the target preview window.

3. The method for preview play according to claim 1, wherein after playing the video resource in the preview window, the method further comprises:
stopping playing the video resource in the preview window when a target preview window receives the play instruction;
determining the target video resource corresponding to the flag of the target preview window according to the corresponding relation; and
playing the target video resource in the target preview window.

4. The method for preview play according to claim 1, wherein after determining the video resource corresponding to the flag of the preview window according to the corresponding relation, the method further comprises:
judging whether there exists the video resource corresponding to the flag of the preview window;
triggering the step of playing the video resource in the preview window when there exists the video resource corresponding to the flag of the preview window; and
displaying a prompt message that there does not exist the video resource in the preview window when there does not exist the video resource corresponding to the flag of the preview window.

5. The method for preview play according to claim 1, wherein the step of playing the video resource in the preview window comprises:
determining a play start time corresponding to the video resource; and
starting playing the video resource from the play start time in the preview window.

6. A device for preview play, wherein the device comprises:
a first determining module configured to determine a flag of a preview window when the preview window receives a play instruction;
a first obtaining module configured to obtain a pre-built corresponding relation of the flag of the preview window and a video resource;
a second determining module configured to determine the video resource corresponding to the flag of the preview window according to the corresponding relation; and
a first playing module configured to play the video resource in the preview window.

7. The device for preview play according to claim 6, wherein the device further comprises:
a closing module configured to close a sound of playing the video resource in the preview window when a target preview window receives the play instruction;
a third determining module configured to determine the target video resource corresponding to the flag of the target preview window according to the corresponding relation; and
a second playing module configured to play the target video resource in the target preview window.

8. The device for preview play according to claim 6, wherein the device further comprises:
a stop-playing module configured to stop playing the video resource in the preview window when a target preview window receives the play instruction;
a fourth determining module configured to determine the target video resource corresponding to the flag of the target preview window according to the corresponding relation; and
a third playing module configured to play the target video resource in the target preview window.

9. The device for preview play according to claim 6, wherein the device further comprises:
a judging module configured to judge whether there exists the video resource corresponding to the flag of the preview window;
a triggering module configured to trigger the first playing module when there exists the video resource corresponding to the flag of the preview window; and
a displaying module configured to display a prompt message that there does not exist the video resource in the preview window when there does not exist the video resource corresponding to the flag of the preview window.

10. The device for preview play according to claim 6, wherein the first playing module comprises:
a determining submodule configured to determine a play start time corresponding to the video resource; and
a playing submodule configured to start playing the video resource from the play start time in the preview window.

11. A terminal comprising the device for preview play according to any one of claims 6-10.
